(19) Europäisches Patentamt
European Patent Office
Office européen des brevets

(11) Veröffentlichungsnummer: **0 106 995**
**A1**

# (12) EUROPÄISCHE PATENTANMELDUNG

(21) Anmeldenummer: **83108844.8**

(22) Anmeldetag: **08.09.83**

(51) Int. Cl.³: **A 01 N 47/38**, A 01 N 49/00
//
(A01N47/38, 43/64, 43/54,
43/50, 43/40),(A01N49/00,
43/64, 43/54, 43/50, 43/40)

(30) Priorität: **22.09.82 DE 3235050**

(43) Veröffentlichungstag der Anmeldung: **02.05.84**
**Patentblatt 84/18**

(84) Benannte Vertragsstaaten: **AT BE CH DE FR GB IT LI NL**

(71) Anmelder: **BAYER AG, Konzernverwaltung RP**
**Patentabteilung, D-5090 Leverkusen 1 Bayerwerk (DE)**

(72) Erfinder: **Thomas, Rudolf, Dr., Dellbusch 269,**
**D-5600 Wuppertal 2 (DE)**
Erfinder: **Berg, Dieter, Dr., Gellertweg 27,**
**D-5600 Wuppertal 1 (DE)**
Erfinder: **Kuck, Karl-Heinz, Dr., Heerstrasse 24,**
**D-4018 Langenfeld (DE)**

(54) **Fungizide Mittel.**

(57) Die Erfindung betrifft neue fungizide synergistische Wirkstoffkombinationen aus N-[1-Alkenyl]-N-azolylcarbonyl-anilinen und Azol-Derivaten und/oder Pyridin- und Pyrimidin-Derivaten.

Die Wirkstoffkombinationen sind für den Gebrauch als Pflanzenschutzmittel geeignet und können mit besonderem Erfolg zur Bekämpfung von unerwünschten Mikroorganismen eingesetzt werden.

EP 0 106 995 A1

BAYER AKTIENGESELLSCHAFT 5090 Leverkusen, Bayerwerk
Zentralbereich
Patente, Marken und Lizenzen Bas/Hed-c
III

## Fungizide Mittel

Die vorliegende Erfindung betrifft neue fungizide synergistische Wirkstoffkombinationen aus N-(1-Alkenyl)-N-azolylcarbonyl-anilinen und anderen bekannten fungiziden Wirkstoffen.

Es ist bereits bekannt geworden, daß Wirkstoffkombinationen von fungiziden Azol-Derivaten und fungiziden Polyhalogenalkylthio-Derivaten eine interessante fungizide Wirkung aufweisen (vergleiche DE-OS 2 552 967). Die Wirksamkeit der vorbekannten Wirkstoffkombinationen ist nicht in allen Fällen befriedigend.

Weiterhin ist bereits bekannt geworden, daß folgende Wirkstoffgruppen gute fungizide Eigenschaften besitzen:

(B) Azole, wie z.B.: 1-(4-Chlorphenoxy)-3,3-dimethyl-1-(1,2,4-triazol-1-yl)-2-butanon bzw. -butanol oder 1-(4-Biphenylyl)-3,3-dimethyl-1-(1,2,4-triazol-1-yl)-2-butanol (vgl. DE-PS 22 01 063 und DE-PS 23 24 010); ß-/(2,4-Dichlorphenyl)-methyl/- -(1,1-dimethylethyl)-ß-(1,2,4-triazol-1-yl)-1-ethanol (vgl. DE-OS 27 37 489);

1-/2-(2,4-Dichlorphenyl)-4-propyl-1,3-dioxolan-2-yl-methyl7-1,2,4-triazol (vgl. DE-OS 25 51 560); 1-(4-Chlorphenyl)-4,4-dimethyl-3-hydroxy-3-(1,2,4-triazol-1-ylmethyl)-pentan (vgl. DE-OS 30 18 866); 4,4-Bis-(fluormethyl)-1-cyclohexyl-2-(1,2,4-triazol-1-yl)-3-pentanol (vgl. DE-OS 29 51 163); oder 1-/2-(2,4-Dichlorphenyl)-2-(2-propenyloxy)-ethyl7-imidazol (vgl. DE-OS 20 63 857); und

(C) Pyridin- und Pyrimidin-Derivate, wie z.B. (2,4-Dichlorphenyl)-phenyl-(5-pyrimidinyl)-methanol (vgl. DE-OS 17 70 288); oder (4-Chlorphenoxymethyl)-(5-pyrimidinyl)-(tert.-butyl)-methanol (vgl. DE-OS 27 42 173).

Die fungizide Wirksamkeit dieser Verbindungen als Einzelwirkstoffe ist jedoch nicht in allen Fällen voll befriedigend.

Es wurde nun gefunden, daß neue Wirkstoffkombinationen aus

(A) N-(1-Alkenyl)-N-azolylcarbonyl-anilinen der allgemeinen Formel

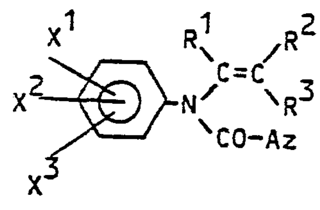

(I)

in welcher

$R^1$ für Wasserstoff und Alkyl steht,

$R^2$ für Wasserstoff, Alkyl, Alkoxy, Alkoxyalkyl, Hydroxyalkyl oder Benzyl steht,

$R^3$ für Wasserstoff, Alkyl, Alkenyl, Alkoxy, Alkoxyalkyl, Alkylcarbonyl, Alkylcarbonylalkyl, Alkoxycarbonyl oder Alkoxycarbonylalkyl steht, oder

$R^1$ und $R^2$ gemeinsam mit der C=C-Doppelbindung für einen gegebenenfalls substituierten, einfach oder mehrfach ungesättigten Ring stehen, der auch Heteroatome enthalten kann, oder

$R^2$ und $R^3$ gemeinsam mit dem angrenzenden Kohlenstoffatom für einen gegebenenfalls substituierten, gesättigten oder ungesättigten Ring stehen, der auch Heteroatome enthalten kann,
oder

$R^2$ und $R^3$ gemeinsam für den Rest der Formel $=C{\diagup R^4 \atop \diagdown R^5}$ stehen, wobei

$R^4$ für Wasserstoff oder Alkyl steht und

$R^5$ für Alkyl oder Phenyl steht,

$X^1$,$X^2$ und $X^3$ unabhängig voneinander für Wasserstoff, Alkyl oder Halogen stehen und

Az für Pyrazol-1-yl, 1,2,4-Triazol-1-yl und Imidazol-1-yl steht,

sowie deren Säureadditions-Salze und Metallsalz-Komplexe; und

(B) Azol-Derivaten der allgemeinen Formeln

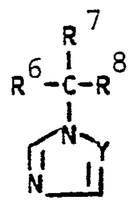

(IIa)

in welcher

$R^6$ für gegebenenfalls substituiertes Phenyl und Phenylcarbonyl, für einen gegebenenfalls substituierten Heterocyclus, für Alkyl, Alkenyl, Alkinyl, Cycloalkyl, Alkylcarbonyl, eine Cyano-Gruppe, eine Estergruppierung oder einen Säureamidrest steht,

$R^7$ für gegebenenfalls substituiertes Phenyl, Alkyl oder Cycloalkyl steht,

$R^8$ für gegebenenfalls substituiertes Phenyl steht, und

Y für Stickstoff oder eine -CH-Gruppe steht;

beziehungsweise

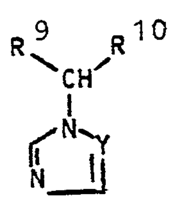

(IIb)

in welcher

$R^9$ für Wasserstoff, Alkenyl, Alkinyl und für gegebenenfalls substituierte Reste aus der Reihe Aryloxy, Heteroaryloxy, Arylmethyl, Alkyl, Aryl, Cycloalkylmethyl und Cycloalkyl steht,

$R^{10}$ für gegebenenfalls substituiertes Alkylcarbonyl und Arylcarbonyl oder ein funktionelles Derivat der Carbonylfunktion, wie Oxim, Hydrazon und Ketal, für eine -COOH-Gruppierung oder deren funktionelle Derivate, wie Ester und Amide steht, für eine $-CH(OH)-R^{11}$-Gruppierung oder deren funktionelle Derivate, wie Ester und Ether steht, wobei

$R^{11}$ für gegebenenfalls substituiertes Alkyl oder Aryl steht, und

Y für Stickstoff oder eine -CH-Gruppe steht;

beziehungsweise

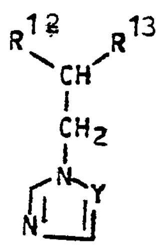

(IIc)

in welcher

$R^{12}$ für gegebenenfalls substituiertes Aryl und Aryloxy steht,

$R^{13}$ für gegebenenfalls substituiertes Alkoxy, Alkenoxy, Alkinoxy, Arylcarbonyl und Alkylcarbonyl oder für eine -CH(OH)-$R^{14}$-Gruppierung steht, wobei

$R^{14}$ für gegebenenfalls substituiertes Aryl oder für Alkyl steht, und

Y für Stickstoff oder eine -CH-Gruppe steht;

beziehungsweise

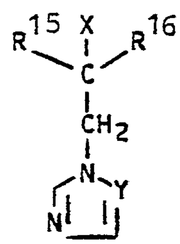

(IId)

in welcher

$R^{15}$ für gegebenenfalls substituiertes Aryl, für Aralkyl oder Aryloxyalkyl steht,

$R^{16}$ für gegebenenfalls substituiertes Aryl oder Alkyl steht,

X für eine OH- oder CN-Gruppe steht und

Y für Stickstoff oder eine -CH-Gruppe steht;

beziehungsweise

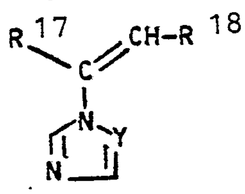

(IIe)

in welcher

$R^{17}$ für gegebenenfalls substituiertes Alkylcarbonyl und Arylcarbonyl oder für eine $-CH(OH)-R^{19}$-Gruppierung steht,

$R^{18}$ für gegebenenfalls substituierte Reste aus der Reihe Aryl, Alkyl und Cycloalkyl steht,

$R^{19}$ für gegebenenfalls substituiertes Alkyl und Aryl steht, und

Y für Stickstoff oder eine -CH-Gruppierung steht;

beziehungsweise

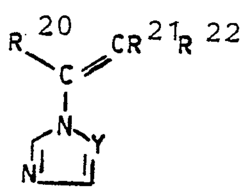

(IIf)

in welcher

$R^{20}$ für Wasserstoff oder für gegebenenfalls substituiertes Aryl und Aryloxy steht,

$R^{21}$ für Alkyl oder für gegebenenfalls substituiertes Phenyl und Phenoxy steht,

$R^{22}$ für Alkylcarbonyl, für gegebenenfalls substituiertes Arylcarbonyl und für eine $-CH(OR^{23})R^{24}$-Gruppierung steht, wobei

$R^{23}$ für Wasserstoff, Alkyl, Alkenyl, Alkinyl, Trialkylsilyl oder gegebenenfalls substituiertes Aralkyl steht,

$R^{24}$ für Alkyl oder gegebenenfalls substituiertes Aryl steht und

Y für Stickstoff oder eine -CH-Gruppe steht;

sowie deren Säureadditions-Salze und Metallsalz-Komplexe und geometrischen und optischen Isomeren der allgemeinen Formeln (IIa) bis (IIf);

und/oder

(C) Pyridin- und Pyrimidin-Derivaten der allgemeinen Formel

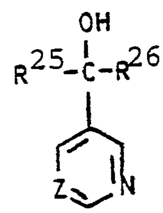

(III)

in welcher

$R^{25}$ für gegebenenfalls substituierte Reste aus der Reihe Aryl, Aralkyl und Aryloxyalkyl steht,

$R^{26}$ für Alkyl, Cycloalkyl und gegebenenfalls substituiertes Aryl steht und

Z für Stickstoff oder eine -CH-Gruppe steht,

sowie deren Säureadditions-Salze und Metallsalz-Komplexe eine besonders hohe fungizide Wirkung aufweisen.

Überraschenderweise ist die fungizide Wirkung der erfindungsgemäßen Wirkstoffkombinationen aus (A) N-(1-Alkenyl)-N-azolylcarbonyl-anilinen der Formel (I) und (B) Azol-Derivaten der Formel (IIa), (IIb), (IIc), (IId), (IIe), (IIf) und/oder (C) Pyridin- bzw. Pyrimidin-Derivaten der Formel (III) höher als die Wirkung der Einzelkomponenten und auch als die Summe der Einzelkomponenten (synergistischer Effekt). Die erfindungsgemäßen Wirkstoffkombinationen stellen eine Bereicherung der Technik dar.

Die für die erfindungsgemäße Kombinationen zu verwendenden N-(1-Alkenyl)-N-azolylcarbonyl-aniline der Gruppe (A) sind durch die Formel (I) allgemein definiert. In dieser Formel stehen vorzugsweise

$R^1$ für Wasserstoff oder geradkettiges bzw. verzweigtes Alkyl mit 1 bis 4 Kohlenstoffatomen;

$R^2$ für Wasserstoff, geradkettiges oder verzweigtes Alkyl mit 1 bis 4 Kohlenstoffatomen, Alkoxy mit 1 bis 4 Kohlenstoffatomen, Hydroxyalkyl mit 1 bis 4 Kohlenstoffatomen, Alkoxyalkyl mit 1 bis 4 Kohlenstoffatomen im Alkylteil und 1 bis 4 Kohlenstoffatomen im Alkoxyteil oder für Benzyl;

$R^3$ für Wasserstoff, geradkettiges oder verzweigtes Alkyl mit 1 bis 4 Kohlenstoffatomen, Alkoxy mit 1 bis 4 Kohlenstoffatomen, Alkoxyalkyl mit 1 bis 4

Kohlenstoffatomen im Alkylteil und 1 bis 4 Kohlenstoffatomen im Alkoxyteil, Alkylcarbonyl mit 1 bis 4 Kohlenstoffatomen im Alkylteil, Alkylcarbonylalkyl mit 1 bis 4 Kohlenstoffatomen in jedem Alkylteil, Alkoxycarbonyl mit 1 bis 4 Kohlenstoffatomen im Alkoxyteil, Alkoxycarbonylalkyl mit 1 bis 4 Kohlenstoffatomen im Alkoxyteil und 1 bis 4 Kohlenstoffatomen im Alkylteil oder für geradkettiges oder verzweigtes Alkenyl mit 2 bis 6 Kohlenstoffatomen;

oder

$R^1$ und $R^2$ gemeinsam mit der C=C-Doppelbindung für einen gegebenenfalls ein- bis vierfach substituierten, ein- oder mehrfach ungesättigten, 5- oder 6-gliedrigen Ring, der ein oder zwei Heteroatome und/oder eine Carbonylgruppe enthalten kann, wobei als Substituenten beispielsweise genannt seien: Alkyl mit 1 bis 4 Kohlenstoffatomen, Halogen und Hydroxy;

oder

$R^2$ und $R^3$ gemeinsam mit dem angrenzenden Kohlenstoffatom für einen gegebenenfalls ein- bis vierfach substituierten, gesättigten oder ungesättigten, 5- oder 6-gliedrigen Ring, der ein oder zwei Heteroatome enthalten kann, wobei als Substituenten beispielsweise genannt seien: Alkyl mit 1 bis 4 Kohlenstoffatomen, Halogen und Hydroxy;

oder

$R^2$ und $R^3$ gemeinsam für den Rest der Formel 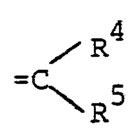 steht, wobei

$R^4$ vorzugsweise für Wasserstoff oder Alkyl mit 1 bis 4 Kohlenstoffatomen steht und

$R^5$ vorzugsweise für Alkyl mit 1 bis 4 Kohlenstoffatomen oder Phenyl steht;

$X^1$ für Wasserstoff, geradkettiges oder verzweigtes Alkyl mit 1 bis 4 Kohlenstoffatomen, Fluor, Chlor oder Brom;

$X^2$ für Wasserstoff, geradkettiges oder verzweigtes Alkyl mit 1 bis 4 Kohlenstoffatomen, Fluor, Chlor oder Brom;

$X^3$ für Wasserstoff und geradkettiges Alkyl mit 1 bis 4 Kohlenstoffatomen, Fluor, Chlor oder Brom und

Az für Pyrazol-1-yl, 1,2,4-Triazol-1-yl und Imidazol-1-yl.

Besonders bevorzugt sind diejenigen Verbindungen der Formel (I), in denen

$R^1$ für Wasserstoff, Methyl, Ethyl, Isopropyl oder tert.-Butyl steht;

$R^2$ für Wasserstoff, Methyl, Ethyl, Isopropyl, Methoxy, Ethoxy, Isopropoxy, Methoxymethyl, Ethoxymethyl, 1-Hydroxy-1-methyl-ethyl oder Benzyl steht;

$R^3$ für Wasserstoff, Methyl, Ethyl, Isopropyl, Methoxy, Ethoxy, Isopropoxy, Methoxymethyl, Ethoxymethyl, Methylcarbonyl, Ethylcarbonyl, Methylcarbonylmethyl, Methoxycarbonyl, Ethoxycarbonyl, Methoxycarbonylmethyl sowie für geradkettiges oder verzweigtes Alkenyl mit 2 bis 4 Kohlenstoffatomen steht;

oder

$R^1$ und $R^2$ gemeinsam mit der C=C-Doppelbindung für einen gegebenenfalls durch Methyl, Ethyl, Hydroxy und/oder Chlor substituierten, einfach oder mehrfach ungesättigten 5- oder 6-gliedrigen Ring stehen, der ein oder zwei Heteroatome, wie insbesondere Sauerstoff, Stickstoff und/oder Schwefel und/oder eine Carbonylgruppe enthalten kann;

oder

$R^2$ und $R^3$ gemeinsam mit dem angrenzenden Kohlenstoffatom für einen gegebenenfalls durch Methyl, Ethyl, Hydroxy und/oder Chlor substituierten, gesättigten oder ungesättigten 5- oder 6-gliedrigen Ring stehen, der ein oder zwei Heteroatome, wie insbesondere Sauerstoff, Stickstoff oder Schwefel, enthalten kann;

oder

$R^2$ und $R^3$ gemeinsam für den Rest der Formel $=C\genfrac{}{}{0pt}{}{\diagup R^4}{\diagdown R^5}$ stehen, wobei

$R^4$ bevorzugt für Wasserstoff, Methyl oder Ethyl steht und

$R^5$ bevorzugt für Methyl, Ethyl oder Phenyl steht;

$X^1$ für Wasserstoff, Methyl, Ethyl, Isopropyl, Isobutyl, sek.-Butyl, tert.-Butyl, Chlor oder Fluor steht;

$X^2$ für Wasserstoff, Methyl, Ethyl, Isopropyl, Isobutyl, sek.-Butyl, tert.-Butyl, Chlor oder Fluor steht;

$X^3$ für Wasserstoff, Methyl, Ethyl, Isopropyl, Isobutyl, sek.-Butyl, tert.-Butyl, Chlor oder Fluor steht und

Az die oben angegebene Bedeutung hat.

Die N-(1-Alkenyl)-N-azolylcarbonyl-aniline der Formel (I) sind noch nicht bekannt, sie sind jedoch Gegenstand einer eigenen älteren Patentanmeldung, die noch nicht veröffentlicht ist (vgl. die deutsche Patentanmeldung P 31 37 299 vom 18.9.1981) und können nach dem dort angegebenen Verfahren erhalten werden, indem man Carbamidsäurechloride der Formel

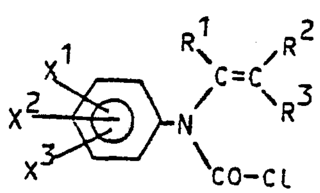

(IV)

in welcher

$R^1, R^2, R^3, X^1, X^2$ und $X^3$ die oben angegebene Bedeutung haben,

mit Azolen der Formel

$$M - Az \qquad (V)$$

in welcher

M für Wasserstoff oder eine Alkalimetall steht und

Az die oben angegebene Bedeutung hat,

gegebenenfalls in Gegenwart eines inerten organischen Lösungsmittels, wie beispielsweise Toluol oder Dimethylformamid und gegebenenfalls in Gegenwart eines Säurebinders, wie beispielsweise Kaliumcarbonat bei Temperaturen zwischen 60°C und 120°C umsetzt.

Die als Ausgangsstoffe zu verwendenden Carbamidsäurechloride der Formel (IV) sind noch nicht bekannt; auch sie sind Gegenstand der o.g. älteren deutschen Patentanmeldung. Die Carbamidsäurechloride der Formel (IV) werden erhalten, indem man Azine der Formel

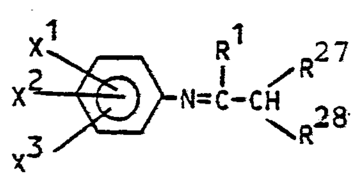

(VI)

in welcher

$R^1$, $X^1$, $X^2$ und $X^3$ die oben angegebene Bedeutung haben und

$R^{27}$ für Wasserstoff, Alkyl, Alkoxy, Alkoxyalkyl, Hydroxyalkyl oder Benzyl steht und

$R^{28}$ für Wasserstoff, Alkyl, Alkenyl, Alkoxy, Alkoxyalkyl, Alkylcarbonyl, Alkylcarbonylalkyl, Alkoxycarbonyl oder Alkoxycarbonylalkyl steht, oder

$R^1$ und $R^{27}$ gemeinsam mit der angrenzenden C-C-Bindung für einen gegebenenfalls substituierten, gesättigten oder ungesättigten Ring stehen, der auch Heteroatome enthalten kann, oder

$R^{27}$ und $R^{28}$ gemeinsam mit dem angrenzenden Kohlenstoffatom für einen gegebenenfalls substituierten, gesättigten oder ungesättigten Ring stehen, der auch Heteroatome enthalten kann, oder

$R^{27}$ und $R^{28}$ gemeinsam für den Rest der Formel 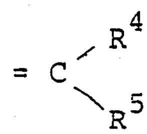 stehen, wobei

$R^4$ für Wasserstoff oder Alkyl steht und

$R^5$ für Alkyl oder Phenyl steht,

mit Phosgen, gegebenenfalls in Gegenwart eines inerten organischen Lösungsmittels, wie beispielsweise Toluol, bei Temperaturen zwischen -20°C und +100°C umsetzt und die entstehenden Carbamidsäurechloride der Formel

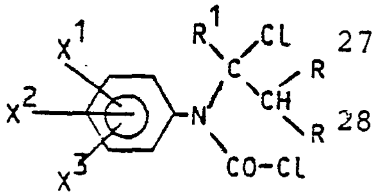

(VII)

in welcher

$R^1$,$R^{27}$,$R^{28}$,$X^1$,$X^2$ und $X^3$ die oben angegebene Bedeutung haben,

ohne vorherige Isolierung, gegebenenfalls in Gegenwart einer Base der Chlorwasserstoffeliminierung unterwirft.

Die Azine der Formel (VI) sind bekannt oder lassen sich in einfacher Weise nach im Prinzip bekannten Verfahren herstellen (vgl. DE-OS 16 70 859 und DE-OS 30 11 084 sowie die eigene deutsche Patentanmeldung P 31 20 990 vom 26.5.1981).

Zur Herstellung von physiologisch verträglichen Säureadditions-Salzen der Verbindungen der Formel (I) können vorzugsweise folgende Säuren infrage kommen: Halogenwasserstoffsäuren, wie z.B. Chlorwasserstoffsäure und Bromwasserstoffsäure, insbesondere Chlorwasserstoffsäure, weiterhin Phosphorsäure, Salpetersäure, Schwefelsäure, mono- und bifunktionelle Carbonsäuren und Hydroxycarbonsäuren, wie z.B. Essigsäure, Maleinsäure, Bernsteinsäure, Sorbinsäure, Milchsäure, Sulfonsäuren, wie z.B. p-Toluolsulfonsäure und 1,5-Naphthalindisulfonsäure.

Die Säureadditionssalze der Verbindungen der Formel (I) können in einfacher Weise nach üblichen Salzbildungsmethoden, z.B. durch Lösen einer Verbindung der Formel (I) in einem geeigneten inerten Lösungsmittel und Hinzufügen der Säure, erhalten werden und in bekannter Weise, z.B. durch Abfiltrieren, isoliert und gegebenenfalls durch Waschen mit einem inerten organischen Lösungsmittel gereinigt werden.

Zur Herstellung von Metallsalz-Komplexen der Verbindungen der Formel (I) kommen vorzugsweise Salze von Metallen der II. bis IV. Haupt- und der I. oderII. sowie IV. bis VIII. Nebengruppe des Periodensystems nach Mendelejew in Frage, wobei Kupfer, Zink, Mangan, Magnesium, Zinn, Eisen und Nickel beispielhaft genannt seien.

Als Anionen der Salze können solche in Betracht kommen, die sich vorzugsweise von folgenden Säuren ableiten: Halogenwasserstoffsäuren wie z.B. Chlorwasserstoffsäure und Bromwasserstoffsäure, ferner Phosphorsäure, Salpetersäure und Schwefelsäure.

Die Metallsalz-Komplexe von Verbindungen der Formel (I) können in einfacher Weise nach üblichen Verfahren erhalten werden, so z.B. durch Lösen des Metallsalzes in Alkohol, z.B. Ethanol und Hinzufügen zur Verbindung der Formel (I). Man kann Metallsalz-Komplexe in bekannter Weise, z.B. durch Abfiltrieren, isolieren und gegebenenfalls durch Umkristallisation reinigen.

Die außerdem für die erfindungsgemäße Kombination zu verwendenden Azole der Gruppe (B) sind durch die Formeln (IIa), (IIb), (IIc), (IId), (IIe) und (IIf) allgemein definiert. Die Verbindungen dieser allgemeinen Formeln und deren Herstellung sind bekannt. Vergleiche hierzu z.B.:

für Verbindungen der allgemeinen Formel (IIa)
DE-OS 1 670 976, DE-PS 1 795 249,
DE-OS 2 128 700 und DE-OS 2 628 152;

für Verbindungen der allgemeinen Formel (IIb): DE-PS 2 201 063, DE-PS 2 324 010, DE-OS 2 431 407, DE-OS 2 547 953, DE-OS 2 600 799, DE-OS 2 632 603, DE-OS 2 720 654, DE-OS 2 720 949, DE-OS 2 756 269, DE-PS 2 800 544, DE-OS 2 832 233, DE-OS 2 918 467, DE-OS 2 926 096, DE-OS 2 943 631, DE-OS 2 610 022, DE-OS 2 638 470, DE-OS 2 640 823, DE-OS 2 654 890, DE-OS 2 734 426, DE-OS 2 737 489, DE-OS 2 551 560, DE-OS 2 063 857; US-PS 4 166 854, EP 15 639, DE-OS 2 105 490 und DE-OS 2 951 163.

Für Verbindungen der allgemeinen Formel (IIc): DE-OS 2 335 020, DE-OS 2 306 495, DE-OS 2 350 122, DE-OS 2 063 857;

für Verbindungen der allgemeinen Formel (IId): DE-OS 2 920 374, DE-OS 3 018 866, DE-OS 2 736 122, DE-OS 2 604 047 und EP 15 756;

für Verbindungen der allgemeinen Formel (IIe): DE-OS 2 906 061, DE-OS 2 929 602, DE-OS 2 838 847, DE-OS 3 010 560 und DE-OS 2 645 617;

und für Verbindungen der allgemeinen Formel (IIf): DE-OS 2 846 980, DE-OS 2 928 967, DE-OS 2 931 755 und EP 28 363.

Als besonders bevorzugte Azol-Derivate der Gruppe (B) seien beispielsweise genannt:

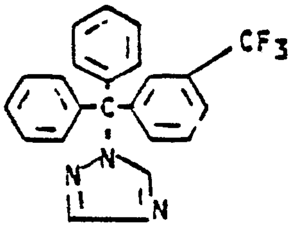

(II a-1)

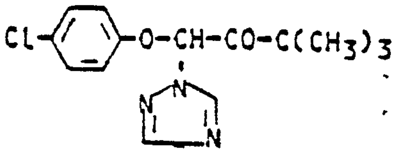

(II b -1)

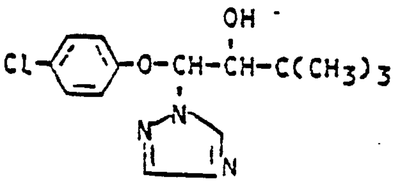

(II b-2)

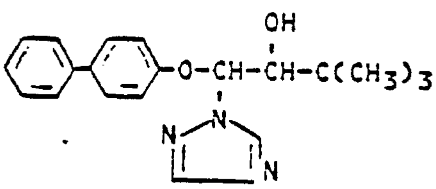

(II b-3)

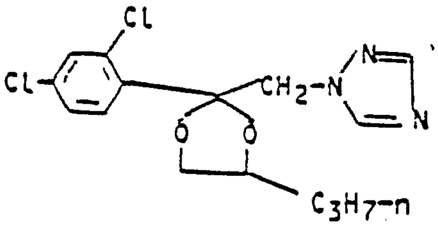

(II b-4)

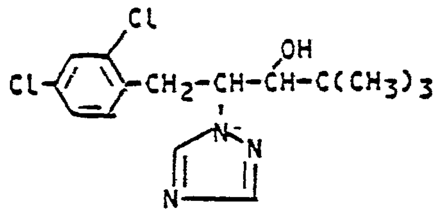

(II b-5)

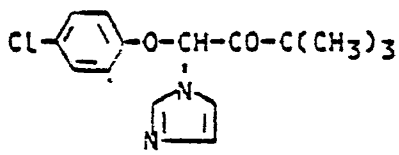

(II b-6)

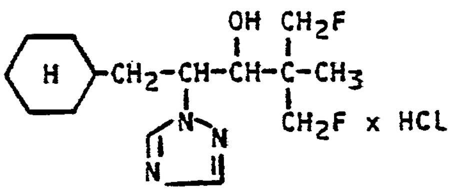

(II b-7)

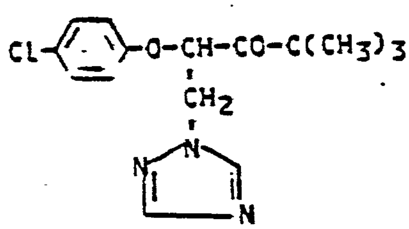

(II c-1)

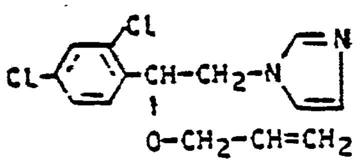

(II c-2)

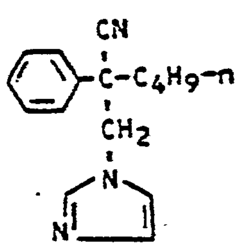

(II d-1)

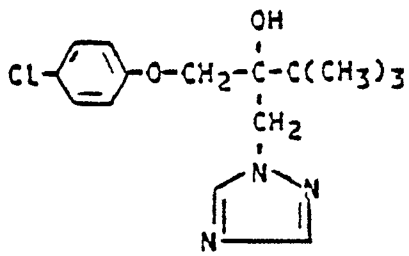

(II d-2)

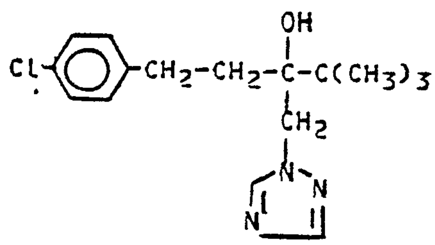

(II d-3)

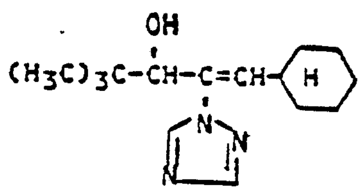

(II e-1)

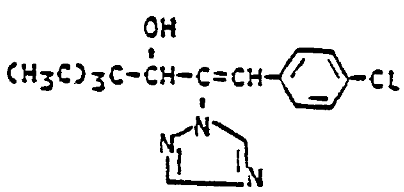

(II e-2)

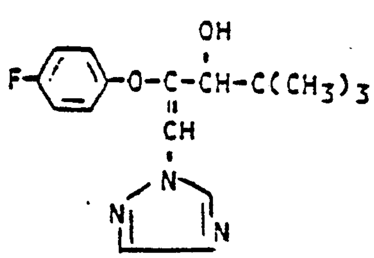

(II f-1)

Bevorzugt sind außerdem die geometrischen und optischen Isomeren der vorgenannten Verbindungsgruppen der Formeln (IIa), (IIb), (IIc), (IId), (IIe) und (IIf).

Die weiterhin als Mischungskomponenten gegebenenfalls zu verwendenden Pyridin- und Pyrimidin-Derivate der Gruppe (C) sind durch die Formel (III) allgemein definiert. Die Verbindungen dieser allgemeinen Formel und deren Herstellung sind bekannt (vgl. DE-OS 2 742 173 und DE-OS 1 770 288).

Als besonders bevorzugte Pyridin- und Pyrimidin-Derivate der Gruppe (C) seien beispielsweise genannt:

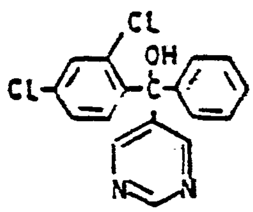

(III -1)

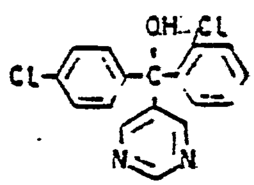

(III-2)

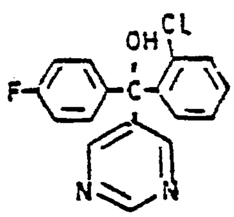

(III -3)

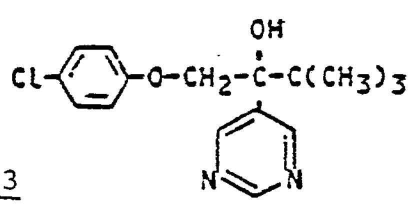

(III -4)

Die genannten Wirkstoffe der Gruppe (C) können auch als weitere Komponente (z.B. als Drittkomponente) zu einer Mischung aus einer Verbindung der Gruppe (A) und einem Azol-Derivat der Gruppe (B) hinzukommen.

Die Gewichtsverhältnisse der Wirkstoffgruppen in den Wirkstoffkombinationen können in relativ großen Bereichen schwanken. Im allgemeinen entfallen auf 1 Gew.-Teil an N-(1-Alkenyl)-N-azolylcarbonyl-aniline (A) 0,00001 bis 10 Gew.-Teile Wirkstoff aus den Wirkstoffklassen (B) und/oder (C), vorzugsweise 0,0001 bis 5 Gew.-Teile aus den letzteren, besonders bevorzugt 0,001 bis 2 Gew.-Teile.

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffkombinationen sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile

befallen oder die Pflanzen vom Boden her angreifen, sowie samenübertragbare Krankheitserreger. Besonders praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia-, Urocystis-, Ustilago-, Septoria-, Typhula-, Rhynchosporium-, Helminthosporium- und Fusarium-Arten hervorgerufen werden. Durch die systemische Wirkung des einen Mischpartners werden die Pflanzen auch oft längere Zeit nach der Beizung noch vor Krankheitserregern geschützt, die verschiedene Teile des Sprosses angreifen können, z.B. Erysiphe graminis und Puccinia-Arten. Die Wirkstoffkombinationen können auch als Bodenbehandlungsmittel gegen phytopathogene Pilze eingesetzt werden und wirken gegen Wurzelfäulen und Tracheomykosen, die z.B. durch Krankheitserreger der Gattung Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophtora-Arten, Peronospora-Arten, Pyricularia oryzae, Pellicularia sasakii.

Die Wirkstoffkombinationen können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigtem gasförmigen Streckmitteln oder Trägerstoffen sind solche Flüssigkeiten gemeint, welche bei normaler Temperatur und

unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material, wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäureester, Polyoxyethylen-Fettalkohol-ether, z.B. Alkylarylpolyglykol-ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffkombinationen können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Injizieren, Verschlämmen, Verstreichen, Stäuben, Streuen, Trockenbeizen, Feuchtbeizen, Naßbeizen, Schlämmbeizen oder Inkrustieren.

Bei der Behandlung können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Beispiel A

MHK-Wert-Bestimmung im Agar-Diffusions-Test
(In-vitro-Bestimmung der synergistischen Aktivität)

Die synergistische Aktivität zwischen den verschiedenen Wirkstoffen wird in-vitro durch den sogenannten Agar-Diffusions-Test bestimmt.

Verwendeter Agar: 5,1 g Potato-Dextrose-Agar (PDA-Agar) und 130 ml destilliertes Wasser

Organismen: Pyricularia oryzae
Pellicularia sasakii
Botrytis cinerea
Fusarium nivale
Drechslera sorokiniana
Candida utilis
Septoria nodorum

Versuchdurchführung:

10 ml einer gut gewaschenen Vorkultur ($\sim 10^7$ Keime/ml) werden bei 41°C in 130ml flüssigen Agar pipettiert, durch Schütteln homogen verteilt und in Nunc-Platten (45 x 45 cm) eingegossen. Nach dem Erstarren des Agars werden Löcher (Ø 10 mm) gestanzt und mit 100µl Probenlösung definierter Konzentration beschickt. Es wird 24 Stunden bei 28°C bebrütet. Die Durchmesser der runden Hemmhöfe werden ausgemessen und der MHK-Wert durch Auftragen des Hemmhofdurchmessers gegen $\log_{Konz.}$ graphisch extrapoliert.

Tabelle A / MHK-Wert-Bestimmung durch Agar-Diffusions-Test

Minimale Hemmkonzentration in ppm bei

| Wirkstoff bzw. Wirkst.-Kombination | Pyricularia oryzae | Pellicularia sasakii | Botrytis cinerea | Fusarium nivale | Drechslera sorokiniana | Septoria nodorum | Candida utilis |
|---|---|---|---|---|---|---|---|
| (I-1) | >1.000 | > 1.000 | > 1.000 | >1.000 | >1.000 | > 1.000 | >1.000 |
| (II b-1) | 43 | 190 | 60 | 130 | -- | 20 | 140 |
| (II b-2) | 56 | 48 | 17 | 140 | 42 | 25 | 16,2 |
| (II b-3) | 19 | 50 | 11 | 40 | 7,8 | 12,5 | -- |
| (II b-4) | 33 | 37 | 35 | 40 | 4 | 6 | 2,2 |
| (II b-5) | 145 | 80 | 36 | 125 | 62 | 23,3 | 18,2 |
| (II b-7) | 27 | 49 | 5 | 22 | 5,6 | 6 | 5 |
| (II c-2) | 10 | 168 | 4 | 25 | 2 | 6 | 28 |
| (II d-3) | 11 | 1,75 | 4,1 | 7,8 | 9,2 | 6 | 17 |
| (I-1) + (II b-1) 1:1 | 38 | 82 | 17,5 | 78 | -- | 9,9 | 130 |
| + (II b-2) 1:1 | 36 | 16,5 | 10,5 | 78 | 33 | 11,2 | 13,5 |
| + (II b-3) 1:1 | 14 | 40 | 8,5 | 16 | 6,4 | 6,9 | -- |
| + (II b-4) 1:1 | 23,5 | 22 | 2 | 25 | 3 | 1,8 | 1,9 |
| + (II b-5) 1:1 | 14 | 46 | 12,6 | 43 | 27 | 16,3 | 10,3 |
| + (II b-7) 1:1 | 6,2 | 24,5 | 4 | 5,3 | 4 | 5,5 | 2,7 |
| + (II c-2) 1:1 | 7,9 | 50 | 3,3 | 4,7 | 1,3 | 4,4 | 10 |
| + (II d-3) 1:1 | 6,5 | 1,35 | 2,1 | 7,2 | 4,8 | 3,3 | 9,2 |

Beispiel B

Pyricularia-Test (Reis) / protektiv

| | | | |
|---|---|---|---|
| Lösungsmittel: | 121,25 | Gewichtsteile | Aceton |
| Emulgator: | 3,75 | Gewichtsteile | Alkylarylpolyglykolether |

Zur Herstellung einer zweckmäßigen Wirkstoffzubereitung vermischt man 1 Gew.-Teil Wirkstoff mit der angegebenen Menge Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wäßrigen Sporensuspension von Pyricularia oryzae inokuliert. Anschließend werden die Pflanzen in einem Gewächshaus bei 100 % rel. Luftfeuchtigkeit und 25°C aufgestellt.

4 Tage nach der Inokulation erfolgt die Auswertung des Krankheitsbefalls.

Um Synergismus zwischen den in diesem Versuch verwendeten Wirkstoffen aufzuzeigen, wurden die Resultate nach der Methode von R.S. Colby (Calculating Synergistic and Antagonistic Responses of Herbicide Combinations. Weeds 15, 20-22, 1967) ausgewertet.

Der erwartete Befall in % der unbehandelten Kontrolle (E) wurde gemäß der Gleichung

$$E = \frac{X \cdot Y}{100}$$

berechnet, worin X für den Krankheitsbefall (in % der unbehandelten Kontrolle) von nur mit Fungiziden der Formel (I) (Gruppe A) behandelten Ansätzen bei einer gegebenen Konzentration und Y für den Krankheitsbefall (in % der unbehandelten Kontrolle) bei einer gegebenen Konzentration von nur mit Fungiziden der Formel (II) (Gruppe B) behandelten Pflanzen steht.

Wenn der beobachtete Befall geringer ist als der erwartete Befall (E), ist Synergismus anzunehmen.

Die in der nachfolgenden Tabelle aufgeführten Resultate belegen beispielhaft eine synergistische Interaktion der beiden Fungizid-Gruppen (A) und (B).

Tabelle B / Pyricularia oryzae (Reis) / protektiv

| Konzentration [ppm] von (I-1) | (I-14) | (II b-2) | Mischungsverhältnis von (I - 1) bzw. (I - 14) : (II b-2) | Beobachteter Krankheitsbefall in % der unbehandelten Kontrolle | Erwarteter Befall in % der unbehandelten Kontrolle (E) |
|---|---|---|---|---|---|
| Bekannte Einzelwirkstoffe | | | | | |
| 10 | -- | -- | -- | 100 | -- |
| 100 | -- | -- | -- | 81 | -- |
| -- | 1 | -- | -- | 100 | -- |
| -- | -- | 0,1 | -- | 100 | -- |
| -- | -- | 50 | -- | 95 | -- |
| -- | -- | 100 | -- | 91 | -- |
| Erfindungsgemäße Mischungen : | | | | | |
| 10 | -- | 50 | 1 : 5 | 63 | 95 |
| 100 | -- | 100 | 1 : 1 | 40 | 74 |
| -- | 1 | 0,1 | 10 : 1 | 65 | 100 |

Beispiel C

Erysiphe-Test (Gerste) / protektiv

| | | | |
|---|---|---|---|
| Lösungsmittel: | 121,25 | Gewichtsteile | Aceton |
| Emulgator: | 3,75 | Gewichtsteile | Alkylarylpolyglykolether |

Zur Herstellung einer zweckmäßigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit Sporen von Erysiphe graminis f. sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. (vgl. hierzu Beispiel B).

Tabelle C / Erysiphe-Test (Gerste) / protektiv

| Konzentration [ppm] von (I - 1) | Konzentration [ppm] von (II b-2) | Mischungsverhältnis von (I-1) : (II b-2) | Beobachteter Krankheitsbefall in % der unbehandelten Kontrolle | Erwarteter Befall in % der unbehandelten Kontrolle (E) |
|---|---|---|---|---|
| Bekannte Einzelwirkstoffe | | | | |
| 0,01 | -- | -- | 99 | -- |
| 0,1 | -- | -- | 97 | -- |
| -- | 0,1 | -- | 80 | -- |
| Erfindungsgemäße Mischungen : | | | | |
| 0,01 | 0,1 | 1 : 10 | 64 | 79 |
| 0,1 | 0,1 | 1 : 1 | 62 | 78 |

Herstellungsbeispiele

Beispiel 1:

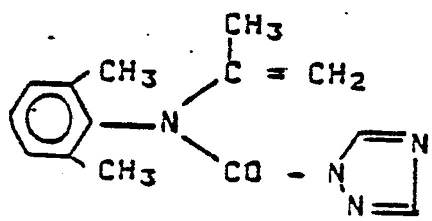

(I-1)

Zu einem Gemisch aus 69 g (1 Mol) 1,2,4-Triazol und 138 g (1 Mol) Kaliumcarbonat in 500 ml Dimethylformamid werden bei 20°C 233 g (1 Mol) N-Chlorcarbonyl-N-(1-methylvinyl)-2,6-dimethylanilin, gelöst in 100 ml Dimethylformamid, getropft. Man rührt 2 Stunden bei 80°C nach und gießt dann auf 2 kg Eis. Der dabei anfallende Feststoff wird abfiltriert und aus Petrolether umkristallisiert. Man erhält 102 g (79,6 % der Theorie) N-(1-Methylvinyl)-N-(1,2,4-triazol-1-yl-carbonyl)-2,6- dimethylanilin in Form farbloser Kristalle vom Schmelzpunkt 65°C.

Herstellung des Ausgangsproduktes

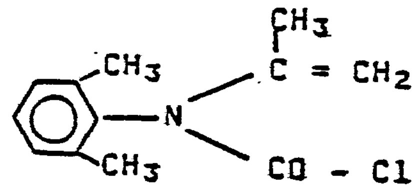

In eine Lösung von 161,2 g (1 Mol) N-Isopropyliden-2,6-dimethylanilin in 500 ml Toluol werden bei 0°C unter Rühren 49,5 g (0,5 Mol) Phosgen eingeleitet. Anschließend rührt man 2 Stunden bei 20°C nach, vertreibt überschüssiges Phosgen durch Einleiten von Stickstoff und saugt dann vom ausgefallenen Niederschlag ab. Das Filtrat wird im Vakuum eingedampft, der Eindampfrückstand im Hochvakuum fraktioniert destilliert. Man erhält 107 g (96 % der Theorie) N-Chlorcarbonyl-N-(1-methylvinyl)-2,6-dimethylanilin in Form eines farblosen Öls vom Siedepunkt 85°C/0,3 mbar.

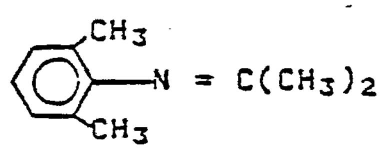

Ein Gemisch aus 121 g Dimethylanilin und 156 g (1,5 Mol) 2,2-Dimethoxypropan wird mit 0,1 g p-Toluolsulfonsäure versetzt und 30 Minuten unter Rückfluß erhitzt. Anschließend wird das entstandene Methanol abdestilliert.

Zur Vervollständigung der Reaktion werden nochmals 52 g (0,5 Mol) 2,2-Dimethoxypropan und 0,05 g p-Toluolsulfonsäure zugesetzt und das Reaktionsgemisch destilliert bis der Siedepunkt des 2,2-Dimethoxypropans (83°C) erreicht

ist. Die verbleibende Lösung wird im Vakuum eingedampft. Man erhält 157 g (97 % der Theorie) N-Isopropyliden-2,6-dimethylanilin in Form eines farblosen Öls.

In analoger Weise können die in der folgenden Tabelle 1 aufgeführten Verbindungen der allgemeinen Formel (I) erhalten werden:

Tabelle 1

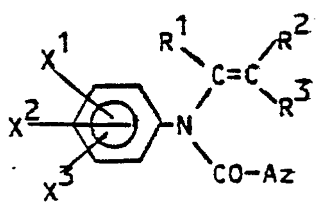

(I)

Tabelle 1 :

| Beisp.-Nr. | $X^1$ | $X^2$ | $X^3$ | $-CR^1=CR^2R^3$ | Az | Schmelzpunkt (°C) |
|---|---|---|---|---|---|---|
| I-2 | $2-CH_3$ | $6-CH_3$ | H | $-C(CH_3)=CH_2$ | 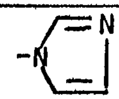 | 88 |
| I-3 | $2-CH_3$ | $6-CH_3$ | H | $-C(CH_3)=CH_2$ | 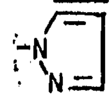 | 62 |
| I-4 | $2-CH_3$ | $6-CH_3$ | H | 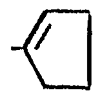 | 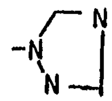 | 140 |
| I-5 | $2-CH_3$ | $6-CH_3$ | H | 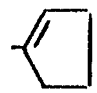 | 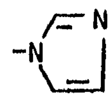 | 116 |
| I-6 | $2-CH_3$ | $6-CH_3$ | H | $-CH=CH-CH=CH_2$ | 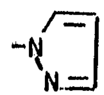 | 116 |
| I-7 | $2-CH_3$ | $6-CH_3$ | H | $-CH=CH-CH=CH_2$ | 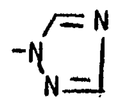 | 112 |
| I-8 | $2-CH_3$ | $6-CH_3$ | H | $-CH=CH-CH=CH_2$ | 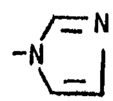 | 106 |
| I-9 | $2-CH_3$ | $6-CH_3$ | H | -CH= 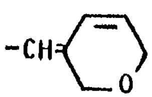 | 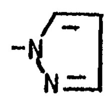 | 127 |

Tabelle 1 : (Fortsetzung)

| Beisp.-Nr. | $X^1$ | $X^2$ | $X^3$ | $-CR^1=CR^2R^3$ | Az | Schmelzpunkt (°C) |
|---|---|---|---|---|---|---|
| I-10 | 2-$CH_3$ | 6-$CH_3$ | H | -CH= 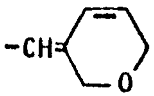 | 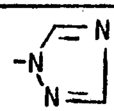 | 161 |
| I-11 | 2-$CH_3$ | 6-$CH_3$ | H | -CH= 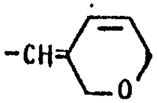 | 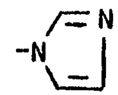 | 186 |
| I-12 | 2-$CH_3$ | 6-$CH_3$ | 4-$CH_3$ | $-C(CH_3)=CH_2$ | 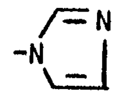 | Oel |
| I-13 | 2-Cl | 6-$CH_3$ | H | $-C(CH_3)=CH-C(CH_3)=CH_2$ | 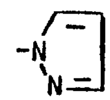 | Oel |
| I-14 | 2-Cl | 6-$CH_3$ | H | $-C(CH_3)=CH-C(CH_3)=CH_2$ | 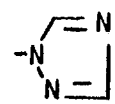 | Oel |
| I-15 | 2-Cl | 6-$CH_3$ | H | $-C(CH_3)=CH-C(CH_3)=CH_2$ | 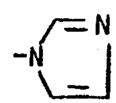 | Oel |
| I-16 | 2-Cl | 6-$CH_3$ | H | 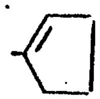 | 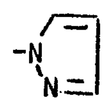 | 122 |

Tabelle 1 : (Fortsetzung)

| Beisp.-Nr. | $X^1$ | $X^2$ | $X^3$ | $-CR^1=CR^2R^3$ | Az | Schmelzpunkt (°C) |
|---|---|---|---|---|---|---|
| I-17 | 2-Cl | 6-$CH_3$ | H | 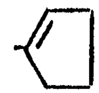 | 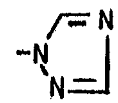 | 132 |
| I-18 | 2-Cl | 6-$CH_3$ | H | 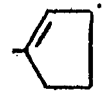 | 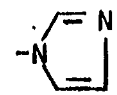 | 106 |
| I-19 | 2-$CH_3$ | 4-$CH_3$ | 6-$CH_3$ | $-C(CH_3)=CH_2$ | 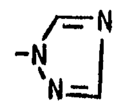 | Oel |
| I-20 | 2-$CH_3$ | 6-$CH_3$ | H | $-C(CH_3)=CH-C(CH_3)=CH_2$ | 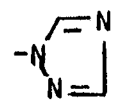 | Oel |
| I-21 | 2-$CH_3$ | 6-$CH_3$ | H | $-C(CH_3)=CH-C(CH_3)=CH_2$ | 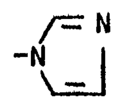 | Oel |
| I-22 | 2-$CH_3$ | 6-$CH_3$ | H | $-CH=CH_2$ | 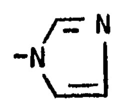 | Oel |
| I-23 | 2-Cl | 6-Cl | H | $-C(CH_3)=CH-C(CH_3)=CH_2$ | 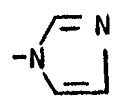 | Oel |
| I-24 | 2-Cl | 6-Cl | H | $-C(CH_3)=CH-C(CH_3)=CH_2$ | 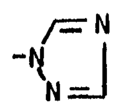 | Oel |

Patentansprüche

1. Fungizide Mittel, gekennzeichnet durch einen Gehalt an einer Wirkstoffkombination aus

(A) N-(1-Alkenyl)-N-azolylcarbonyl-anilinen der Formel

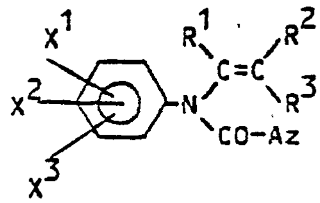

(I)

in welcher

$R^1$ für Wasserstoff oder Alkyl steht,

$R^2$ für Wasserstoff, Alkyl, Alkoxy, Alkoxyalkyl, Hydroxyalkyl oder Benzyl steht,

$R^3$ für Wasserstoff, Alkyl, Alkenyl, Alkoxy, Alkoxyalkyl, Alkylcarbonyl, Alkylcarbonylalkyl, Alkoxycarbonylalkyl steht, oder

$R^1$ und $R^2$ gemeinsam mit der C=C-Doppelbindung für einen gegebenenfalls substituierten, einfach oder mehrfach ungesättigten Ring stehen, der auch Heteroatome enthalten kann, oder

$R^2$ und $R^3$ gemeinsam mit dem angrenzenden Kohlenstoffatom für einen gegebenenfalls substituierten, gesättigten oder ungesättigten Ring stehen, der auch Heteroatome enthalten kann, oder

$R^2$ und $R^3$ gemeinsam für den Rest der Formel 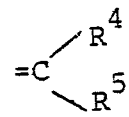 stehen, wobei

$R^4$ für Wasserstoff oder Alkyl steht und

$R^5$ für Alkyl oder Phenyl steht,

$X^1$,$X^2$ und $X^3$ unabhängig voneinander für Wasserstoff, Alkyl oder Halogen stehen und

Az für Pyrazol-1-yl, 1,2,4-Triazol-1-yl oder Imidazol-1-yl steht,

sowie deren Säureadditons-Salze und Metallsalz-Komplexe; und

(B) Azol-Derivaten der Formel

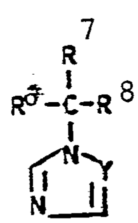

(IIa)

in welcher

in welcher

$R^6$ für gegebenenfalls substituiertes Phenyl und Phenylcarbonyl, für einen gegebenenfalls substituierten Heterocyclus, für Alkyl, Alkenyl, Alkinyl, Cycloalkyl, Alkylcarbonyl, eine Cyano-Gruppe, eine Estergruppierung oder einen Säureamidrest steht,

$R^7$ für gegebenenfalls substituiertes Phenyl, Alkyl oder Cycloalkyl steht,

$R^8$ für gegebenenfalls substituiertes Phenyl steht, und

Y für Stickstoff oder eine -CH-Gruppe steht;

beziehungsweise

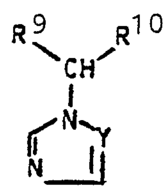

(IIb)

in welcher

$R^9$ für Wasserstoff, Alkenyl, Alkinyl oder für einen gegebenenfalls substituierten Rest aus der Reihe Aryloxy, Heteroaryloxy, Arylmethyl, Alkyl, Aryl, Cycloalkylmethyl und Cycloalkyl steht,

$R^{10}$ für gegebenenfalls substituiertes Alkylcarbonyl und Arylcarbonyl oder ein funktionelles Derivat der Carbonylfunktion, die Oxim, Hydrazon und Ketal, für

eine -COOH-Gruppierung oder deren funktionelle Derivate, wie Ester und Amide steht, für eine $-CH(OH)-R^{11}$-Gruppierung oder deren funktionelle Derivate, die Ester und Ether steht, wobei

$R^{11}$ für gegebenenfalls substituiertes Alkyl oder Aryl steht, und

Y für Stickstoff oder eine -CH-Gruppe steht;

beziehungsweise

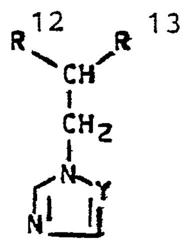

(IIc)

in welcher

$R^{12}$ für gegebenenfalls substituiertes Aryl und Aryloxy steht,

$R^{13}$ für gegebenenfalls substituiertes Alkoxy, Alkenoxy, Alkinoxy, Arylcarbonyl und Alkylcarbonyl oder für eine $-CH(OH)-R^{14}$-Gruppierung steht, wobei

$R^{14}$ für gegebenenfalls substituiertes Aryl oder für Alkyl steht, und

Y für Stickstoff oder eine -CH-Gruppe steht;

beziehungsweise

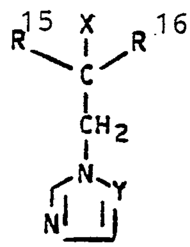

(IId)

in welcher

$R^{15}$ für gegebenenfalls substituiertes Aryl, für Aralkyl oder Aryloxyalkyl steht,

$R^{16}$ für gegebenenfalls substituiertes Aryl oder Alkyl steht,

X für eine OH- oder CN-Gruppe steht und

Y für Stickstoff oder eine -CH-Gruppe steht;

beziehungsweise

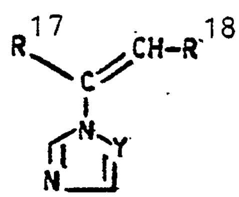

(IIe)

in welcher

$R^{17}$ für gegebenenfalls substituiertes Alkylcarbonyl und Arylcarbonyl oder für eine $-CH(OH)-R^{19}$-Gruppierung steht,

$R^{18}$ für gegebenenfalls substituierte Reste aus der Reihe Aryl, Alkyl und Cycloalkyl steht,

$R^{19}$ für gegebenenfalls substituiertes Alkyl und Aryl steht, und

Y für Stickstoff oder eine -CH-Gruppierung steht;

beziehungsweise

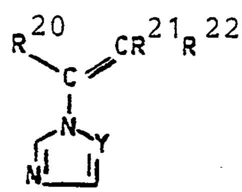

(IIf)

in welcher

$R^{20}$ für Wasserstoff oder für gegebenenfalls substituiertes Aryl und Aryloxy steht,

$R^{21}$ für Alkyl oder für gegebenenfalls substituiertes Phenyl und Phenoxy steht,

$R^{22}$ für Alkylcarbonyl, für gegebenenfalls substituiertes Arylcarbonyl und für eine $-CH(OR^{23})R^{24}$-Gruppierung steht, wobei

$R^{23}$ für Wasserstoff, Alkyl, Alkenyl, Alkinyl, Trialkylsilyl oder gegebenenfalls substituiertes Aralkyl steht,

$R^{24}$ für Alkyl oder gegebenenfalls substituiertes Aryl steht und

Y für Stickstoff oder eine -CH-Gruppe steht;

sowie deren Säureadditions-Salze und Metallsalz-Komplexe und geometrischen und optischen Isomeren der Formeln (IIa) bis (IIf);

und/oder

(C) Pyridin- und Pyrimidin-Derivaten der Formel

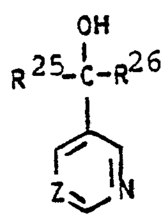

(III)

in welcher

$R^{25}$ für einen gegebenenfalls substituierten Rest aus der Reihe Aryl, Aralkyl und Aryloxyalkyl steht,

$R^{26}$ für Alkyl, Cycloalkyl oder gegebenenfalls substituiertes Aryl steht und

Z für Stickstoff oder eine -CH-Gruppe steht,

sowie deren Säureadditions-Salze und Metallsalz-Komplexe.

2. Fungizide Mittel gemäß Anspruch 1, wobei für die Verbindungen der Gruppe (A) in Formel (I) stehen

$R^1$ für Wasserstoff oder geradkettiges bzw. verzweigtes Alkyl mit 1 bis 4 Kohlenstoffatomen;

$R^2$ für Wasserstoff, geradkettiges oder verzweigtes Alkyl mit 1 bis 4 Kohlenstoffatomen, Alkoxy mit 1 bis 4 Kohlenstoffatomen, Hydroxyalkyl mit 1 bis 4 Kohlenstoffatomen, Alkoxyalkyl mit 1 bis 4 Kohlenstoffatomen im Alkylteil und 1 bis 4 Kohlenstoffatomen im Alkoxyteil oder für Benzyl;

$R^3$ für Wasserstoff, geradkettiges oder verzweigtes Alkyl mit 1 bis 4 Kohlenstoffatomen, Alkoxy mit 1 bis 4 Kohlenstoffatomen, Alkoxyalkyl mit 1 bis 4 Kohlenstoffatomen im Alkylteil und 1 bis 4 Kohlenstoffatomen im Alkoxyteil, Alkylcarbonyl mit 1 bis 4 Kohlenstoffatomen im Alkylteil, Alkylcarbonylalkyl mit 1 bis 4 Kohlenstoffatomen in jedem Alkylteil, Alkoxycarbonyl mit 1 bis 4 Kohlenstoffatomen im Alkoxyteil, Alkoxycarbonylalkyl mit 1 bis 4 Kohlenstoffatomen im Alkoxyteil und 1 bis 4 Kohlenstoffatomen im Alkylteil oder für geradkettiges oder verzweigtes Alkenyl mit 2 bis 6 Kohlenstoffatomen;

oder

$R^1$ und $R^2$ gemeinsam mit der C=C-Doppelbindung für einen gegebenenfalls ein- bis vierfach substituierten, ein- oder mehrfach ungesättigten, 5- oder 6-gliedrigen Ring, der ein oder zwei Heteroatome und/oder eine Carbonylgruppe enthalten kann, wobei als Substituenten genannt seien: Alkyl mit 1 bis 4 Kohlenstoffatomen, Halogen und Hydroxy;

oder

$R^2$ und $R^3$ gemeinsam mit dem angrenzenden Kohlenstoffatom für einen gegebenenfalls ein- bis vierfach substituierten, gesättigten oder ungesättigten, 5- oder 6-gliedrigen Ring, der ein oder zwei Heteroatome enthalten kann, wobei als Substituenten genannt seien: Alkyl mit 1 bis 4 Kohlenstoffatomen, Halogen und Hydroxy;

oder

$R^2$ und $R^3$ gemeinsam für den Rest der Formel $=C{<}^{R^4}_{R^5}$ wobei

$R^4$ vorzugsweise für Wasserstoff oder Alkyl mit 1 bis 4 Kohlenstoffatomen steht und

$R^5$ vorzugsweise für Alkyl mit 1 bis 4 Kohlenstoffatomen oder Phenyl steht;

$X^1$ für Wasserstoff, geradkettiges oder verzweigtes Alkyl mit 1 bis 4 Kohlenstoffatomen, Fluor, Chlor oder Brom;

$X^2$ für Wasserstoff, geradkettiges oder verzweigtes Alkyl mit 1 bis 4 Kohlenstoffatomen, Fluor, Chlor oder Brom;

$X^3$ für Wasserstoff oder geradkettiges Alkyl mit 1 bis 4 Kohlenstoffatomen, Fluor, Chlor oder Brom und

Az für Pyrazol-1-yl, 1,2,4-Triazol-1-yl oder Imidazol-1-yl und eine der folgenden Verbindungen aus der Gruppe (B) stehen

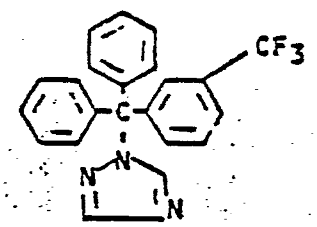

(II a-1)

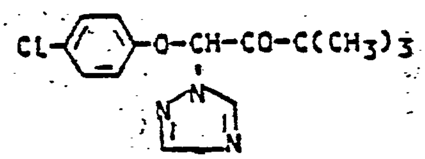

(II b-1)

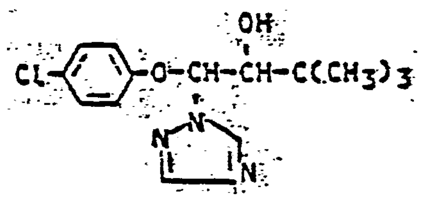

(II b-2)

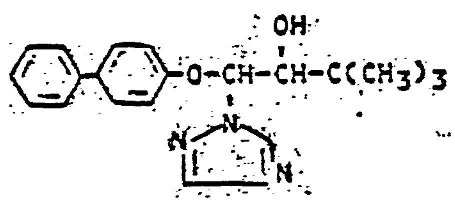

(II b-3)

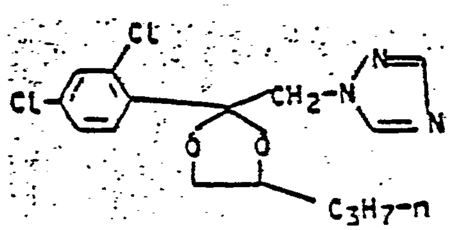

(II b-4)

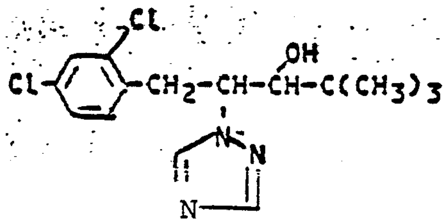

(II b-5)

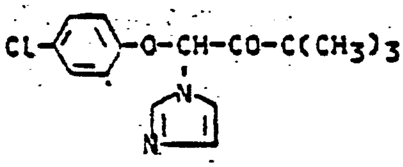

(II b-6)

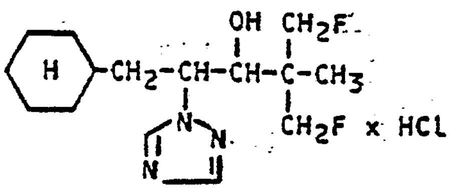

(II b-7)

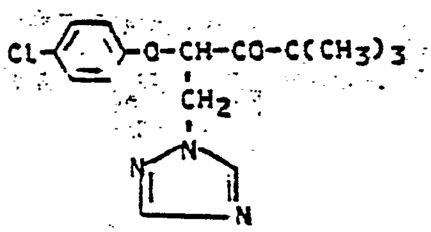

(II c-1)

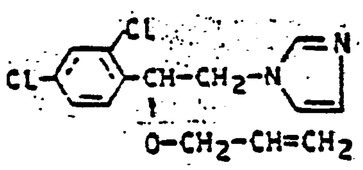

(II c-2)

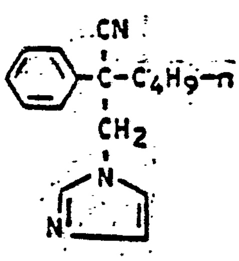

(II d-1)

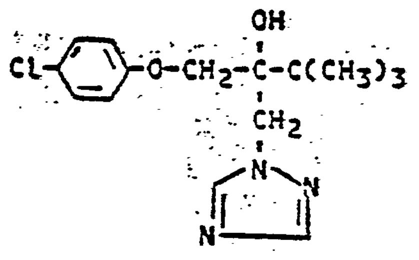

(II d-2)

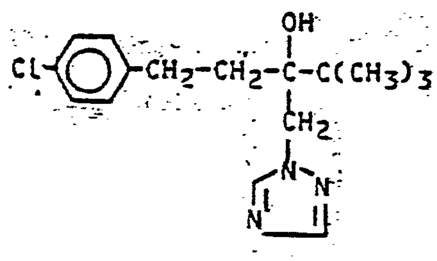

(II d-3)

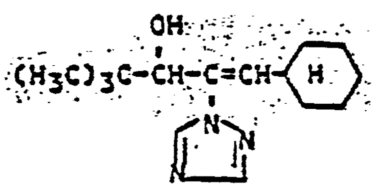

(II e-1)

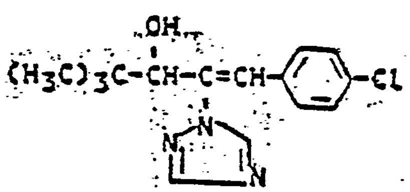

(II e-2)

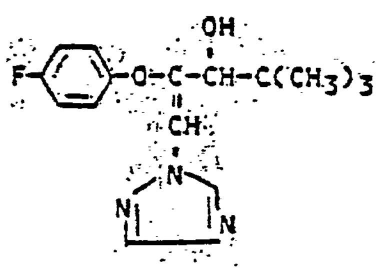

(II f-1)

und/oder eine der folgenden Verbindungen aus Gruppe (C) stehen:

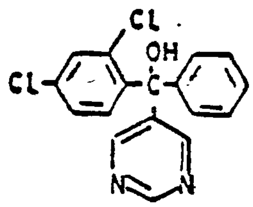

(III -1)

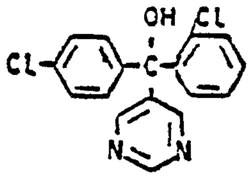

(III-2)

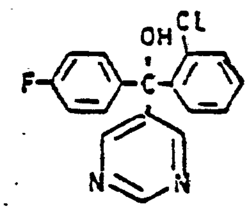

(III -3)

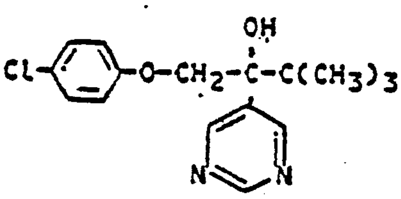

(III -4)

3. Fungizide Mittel gemäß Anspruch 1, wobei für die Verbindungen der Gruppe (A) in Formel I stehen

$R^1$ für Wasserstoff, Methyl, Ethyl, Isopropyl oder tert.-Butyl;

$R^2$ für Wasserstoff, Methyl, Ethyl, Isopropyl, Methoxy, Ethoxy, Isopropoxy, Methoxymethyl, Ethoxymethyl, iso-Hydroxypropyl oder Benzyl;

$R^3$ für Wasserstoff, Methyl, Ethyl, Isopropyl, Methoxy, Ethoxy, Isopropoxy, Methoxymethyl, Ethoxymethyl, Methylcarbonyl, Ethylcarbonyl, Methylcarbonylmethyl, Methoxycarbonyl, Ethoxycarbonyl, Methoxycarbonylmethyl sowie für geradkettiges oder verzweigtes Alkenyl mit 2 bis 4 Kohlenstoffatomen,

oder

$R^1$ und $R^2$ gemeinsam mit der C=C-Doppelbindung für einen gegebenenfalls durch Methyl, Ethyl, Hydroxy und/oder Chlor substituierten, einfach oder mehrfach ungesättigten 5- bis 6-gliedrigen Ring stehen, der gegebenenfalls ein oder zwei Sauerstoff-, Stickstoff- und/oder Schwefelatome und/oder eine Carbonylgruppe enthalten kann;

oder

$R^2$ und $R^3$ gemeinsam mit dem angrenzenden Kohlenstoffatom für einen gegebenenfalls durch Methyl, Ethyl, Hydroxy und/oder Chlor substituierten, gesättigten oder ungesättigten 5- oder 6-gliedrigen Ring stehen, der gegebenenfalls ein oder zwei Sauerstoff-, Stickstoff- oder Schwefelatome enthalten kann;

oder

$R^2$ und $R^3$ gemeinsam für den Rest der Formel 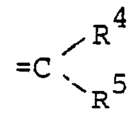 wobei

$R^4$ bevorzugt für Wasserstoff, Methyl oder Ethyl steht und

$R^5$ für Methyl, Ethyl oder Phenyl;

$X^1$ für Wasserstoff, Methyl, Ethyl, Isopropyl, Isobutyl, sek.-Butyl, tert.-Butyl, Chlor oder Fluor;

$X^2$ für Wasserstoff, Methyl, Ethyl, Isopropyl, Isobutyl, sek.-Butyl, tert.-Butyl, Chlor oder Fluor;

$X^3$ für Wasserstoff, Methyl, Ethyl, Isopropyl, Isobutyl, sek.-Butyl, tert.-Butyl, Chlor oder Fluor und

Az für Pyrazol-1-yl, 1,2,4-Triazol-1-yl oder Imidazol-1-yl und

eine der folgenden Verbindungen aus der Gruppe (B) stehen

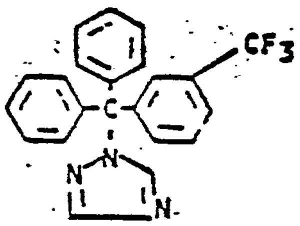

(II a-1)

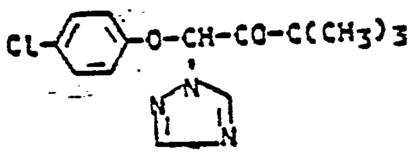

(II b-1)

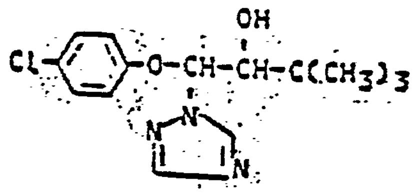

(II b-2)

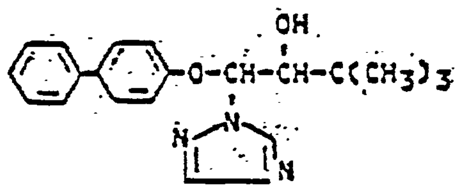

(IIb-3)

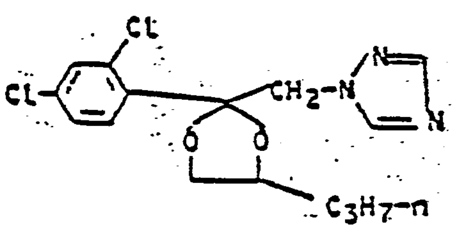

(II b-4)

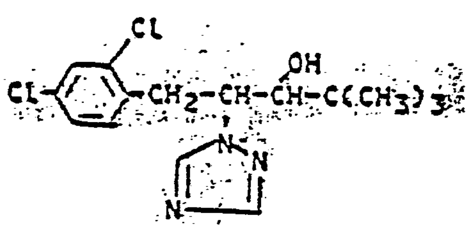

(II b-5)

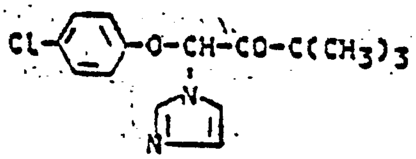

(II b-6)

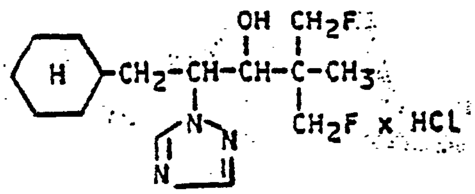

(II b-7)

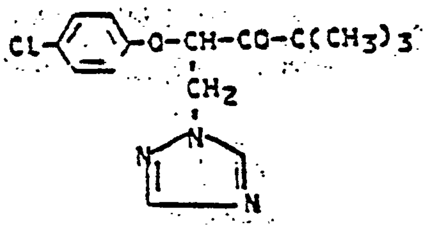

(II c-1)

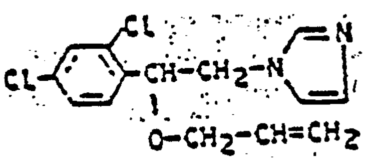

(II c-2)

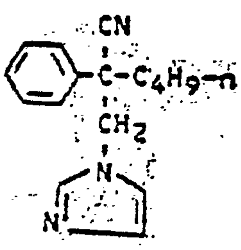

(II d-1)

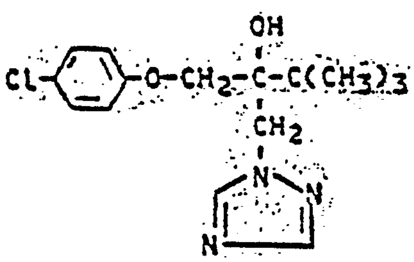

(II d-2)

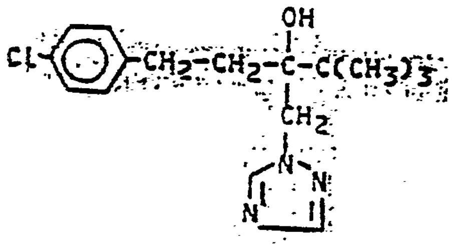

(II d-3)

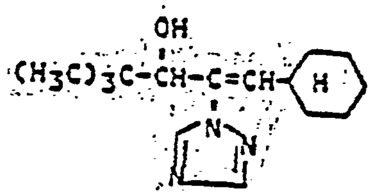

(II e-1)

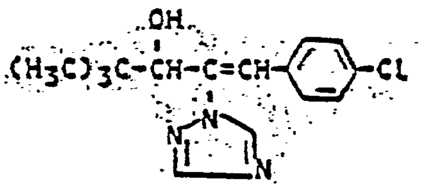

(II e-2)

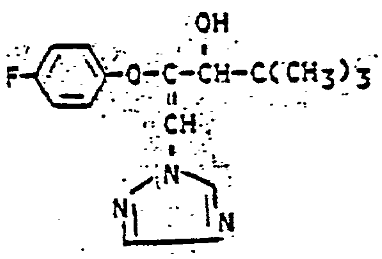

(II f-1)

und/oder eine der folgenden Verbindungen aus Gruppe (C) stehen:

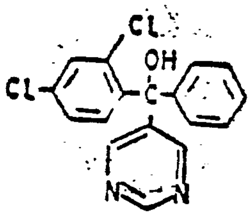

(III -1)

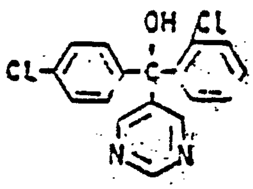

(III-2)

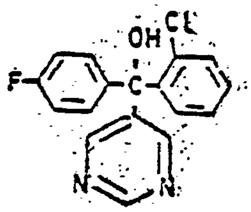

(III-3)

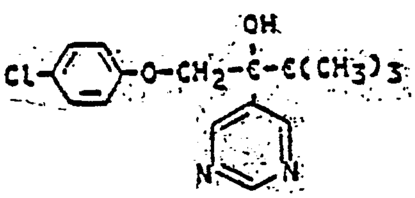

(III-4)

4. Fungizide Mittel gemäß Anspruch 1, wobei für die Verbindungen der Gruppe (A) in Formel I stehen

$R^1$ für Wasserstoff und Methyl;

$R^2$ für Wasserstoff;

$R^3$ für Wasserstoff oder $-C(CH_3)=CH_2$;

$X^1$ für Methyl oder Chlor;

$X^2$ für Methyl;

$X^3$ für Wasserstoff und

Az für 1,2,4-Triazol-1-yl und eine

der folgenden Verbindungen aus Gruppe (B)

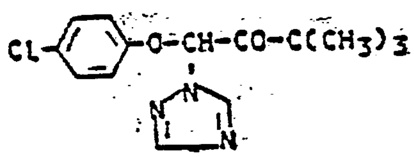

(II b-1)

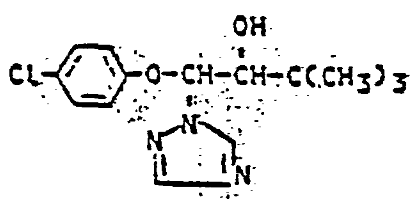

(II b-2)

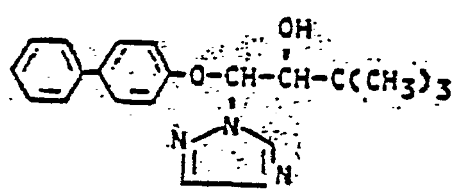

(II b-3)

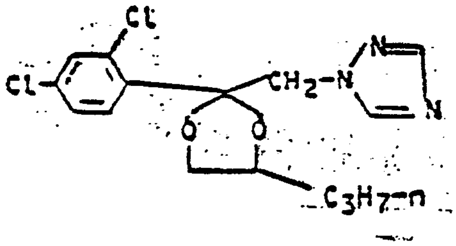

(II b-4)

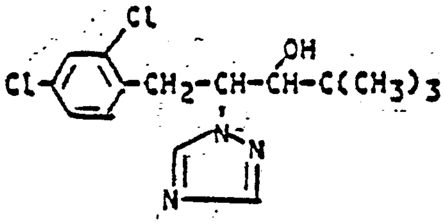

(II b-5)

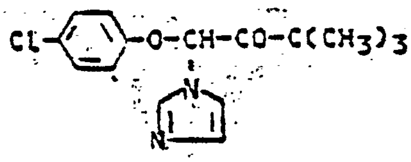

(II b-6)

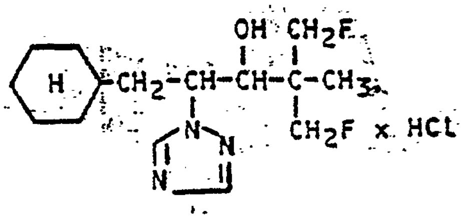

(II b-7)

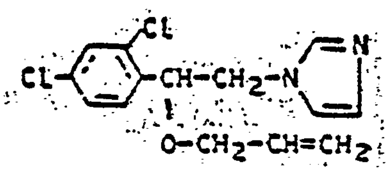

(II c-2)

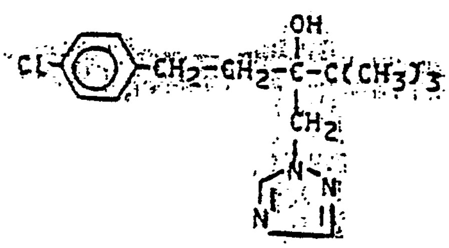

(II d-3)

und/oder eine der folgenden Verbindungen aus Gruppe (C) stehen:

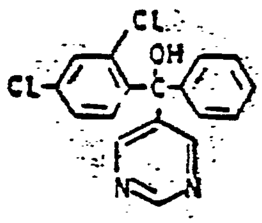

(III-1)

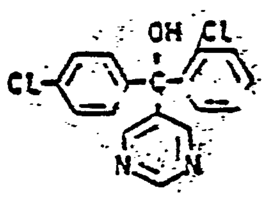

(III-2)

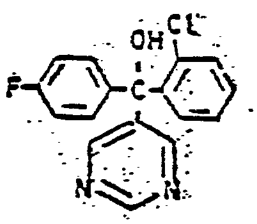

(III-3)

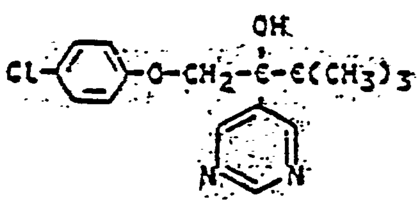

(III-4)

5. Fungizide Mittel gemäß Ansprüchen 1 bis 4, dadurch gekennzeichnet, daß in der Wirkstoffkombination das Gewichtsverhältnis von Wirkstoffen der Gruppe (A) und den Wirkstoffen aus der Gruppe (B) und/oder (C) zwischen 1 : 0,00001 und 1 : 10 liegt.

6. Fungizides Mittel gemäß Ansprüchen 1 bis 6, dadurch gekennzeichnet, daß in der Wirkstoffkombination das Gewichtsverhältnis zwischen 1 : 0,0001 und 1 : 5 liegt.

7. Fungizides Mittel gemäß Ansprüchen 1 bis 6, dadurch gekennzeichnet, daß in der Wirkstoffkombination das Gewichtsverhältnis zwischen 1 : 0,001 und 1 : 2 liegt.

8. Verfahren zur Bekämpfung von Pilzen, dadurch gekennzeichnet, daß man eine Wirkstoffkombination gemäß Anspruch 1,2,3 oder 4 auf Pilze und deren Lebensraum einwirken läßt.

9. Verwendung von Wirkstoffkombinationen gemäß Anspruch 1,2,3 oder 4 zur Bekämpfung von Pilzen.

10. Verfahren zur Herstellung von fungiziden Mitteln, dadurch gekennzeichnet, daß man eine Wirkstoffkombination gemäß Anspruch 1,2,3 oder 4 mit Streckmitteln und/oder oberflächenaktiven Mitteln vermischt.

Europäisches Patentamt

# EUROPÄISCHER RECHERCHENBERICHT

0 106 995

Nummer der Anmeldung

EP 83 10 8844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 234 293 (THE BOOTS COMPANY)<br>--- | 1-10 | A 01 N 47/38<br>A 01 N 49/00 //<br>(A 01 N 47/38<br>A 01 N 43/64<br>A 01 N 43/54<br>A 01 N 43/50<br>A 01 N 43/40 )<br>(A 01 N 49/00<br>A 01 N 43/64<br>A 01 N 43/54<br>A 01 N 43/50<br>A 01 N 43/40 ) |
| A | GB-A-2 011 414 (THE BOOTS COMPANY)<br>--- | 1-10 | |
| A | EP-A-0 040 007 (FBC)<br>--- | 1-10 | |
| T | EP-A-0 075 167 (BAYER)<br>----- | 1-10 | |

| RECHERCHIERTE SACHGEBIETE (Int. Cl. ³) |
|---|
| A 01 N |

Der vorliegende Recherchenbericht wurde für alle Patentansprüche erstellt.

| Recherchenort | Abschlußdatum der Recherche | Prüfer |
|---|---|---|
| DEN HAAG | 11-01-1984 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument